# EUROPEAN PATENT APPLICATION

(11) **EP 2 913 092 A1**
(43) Date of publication of application: **02.09.2015**
(21) Application number: 14197481.6
(22) Date of filing: 11.12.2014
(51) Int. Cl.: B01D 53/14

(54) **Carbon dioxide recovery apparatus and carbon dioxide recovery method**

(30) Priority: 28.02.2014 JP 2014039476
(71) Applicant: Kabushiki Kaisha Toshiba, Tokyo (JP)
(72) Inventor: Ogawa, Takashi, Tokyo (JP); Murai, Shinji, Tokyo (JP); Muramatsu, Takehiko, Tokyo (JP); Saito, Satoshi, Tokyo (JP)
(74) Representative: Granleese, Rhian Jane

(57) **Abstract**

According to one embodiment, a CO₂ recovery apparatus 10 includes: an absorption tower 11 in which a lean solution 22 is allowed to absorb CO₂ in a discharge gas 21; a first heat exchange unit 12 in which a rich solution 23 is heated to from 50 to 100°C to allow the rich solution 23 to have a mixed phase including two phases of a CO₂-rich phase 31 and a CO₂-lean phase 32; a phase separation unit 13 in which the rich solution 23 is separated into a CO₂-rich phase 31 and a CO₂-lean phase 32; and a regeneration tower 16 in which CO₂ contained in a separated CO₂-rich solution 46 including the CO₂-rich phase 31 is separated to regenerate the rich solution 23.

## Description

### FIELD

An embodiment of the present invention relates to a carbon dioxide recovery apparatus and a carbon dioxide recovery method.

### BACKGROUND

In recent years, technologies for separating, recovering, and storing carbon dioxide (CO₂) have received attention as effective measures against the problems of global warming. For example, there have been examined techniques for recovering, in an absorbing liquid, CO₂ in discharge gases such as combustion discharge gases generated from thermal power plants process discharge gases generated from ironworks, and the like. As the absorbing liquid, an amine-based absorbing liquid comprising an amine compound and a solvent such as water or an organic solvent has been preferably used.

Specifically, there has been known a CO₂ recovery apparatus including an absorption tower in which an absorbing liquid and a discharge gas are brought into contact with each other to allow the absorbing liquid to absorb CO₂ in the discharge gas and a regeneration tower in which the absorbing liquid absorbing CO₂ is heated to release CO₂ from the absorbing liquid. In the absorption tower, CO₂ in the discharge gas is absorbed in the absorbing liquid to remove CO₂ from the discharge gas. The absorbing liquid absorbing CO₂ (rich solution) is supplied into the regeneration tower, CO₂ is released from the absorbing liquid in the regeneration tower, the absorbing liquid is regenerated, and CO₂ is recovered. The absorbing liquid regenerated in the regeneration tower (lean solution) is supplied to the absorption tower and reused for absorbing CO₂ in the discharge gas. In the CO₂ recovery apparatus, CO₂ in the discharge gas is separated and recovered by repeating the absorption of CO₂ in the absorption tower and the release of CO₂ in the regeneration tower.

In such an apparatus, a rich solution discharged from an absorption tower is subjected to preheating, such as heat exchange of the rich solution with a lean solution discharged from a regeneration tower by a heat exchanger, and then supplied to the regeneration tower. As a result, the amount of energy required for heating the rich solution to desorb CO₂ in the rich solution in the regeneration tower is reduced.

### BRIEF DESCRIPTION OF THE DRAWINGS

FIG. 1 is a schematic view illustrating the construction of a carbon dioxide recovery apparatus according to a first embodiment;
FIG. 2 is a conceptual diagram illustrating a process from trapping of a CO₂-rich phase by a filter to release of the CO₂-rich phase;
FIG. 3 is an explanatory drawing illustrating a state in a phase separator; and
FIG. 4 is a schematic view illustrating the construction of the phase separator of a CO₂ recovery apparatus according to a second embodiment.

### DETAILED DESCRIPTION

A carbon dioxide recovery apparatus according to one embodiment includes: an absorption tower in which gas-liquid contact of a discharge gas containing CO₂ with an absorbing liquid is carried out to allow said absorbing liquid to absorb said CO₂; a first heat exchange unit that heats said absorbing liquid containing CO₂ to from 50 to 100°C to allow said absorbing liquid containing CO₂ to have a mixed phase including a CO₂-rich phase and a CO₂-lean phase. The carbon dioxide recovery apparatus includes: a phase separation unit that separates said absorbing liquid containing CO₂ into said CO₂-rich phase and said CO₂-lean phase, discharges said CO₂-rich phase as a separated CO₂-rich solution, and discharges said CO₂-lean phase as a separated CO₂-lean solution; and a regeneration tower in which CO₂ contained in said separated CO₂-rich solution is separated to regenerate said absorbing liquid.

Embodiments of the present invention will be described in detail below.

### (First Embodiment)

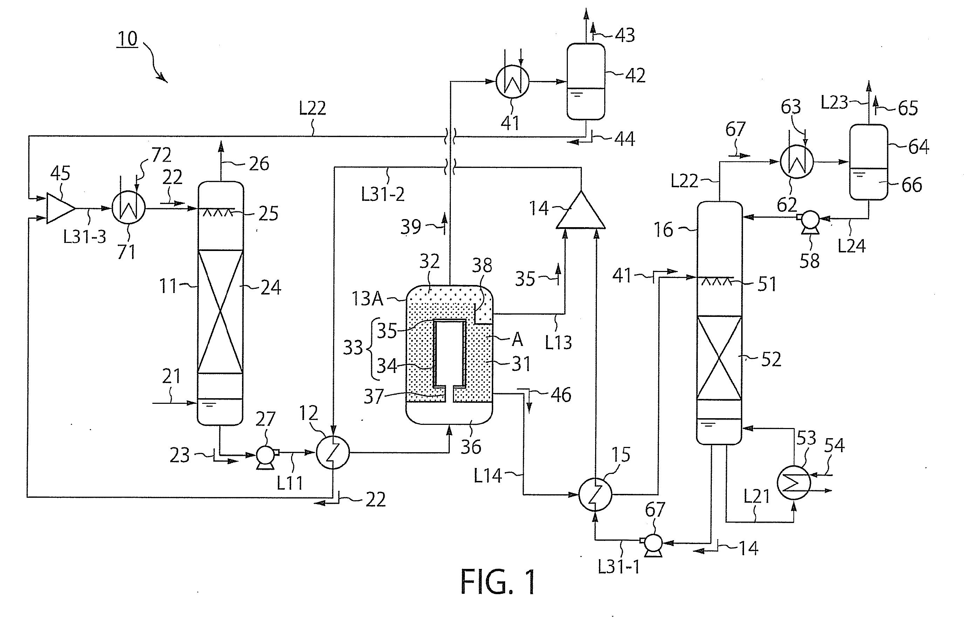

A carbon dioxide (CO₂) recovery apparatus according to a first embodiment will be described with reference to the drawings. FIG.1 is a schematic view illustrating the construction of the CO₂ recovery apparatus according to the first embodiment. As illustrated in FIG. 1, the CO₂ recovery apparatus 10 includes an absorption tower 11, a first heat exchanger (first heat exchange unit) 12, a phase separator (phase separation unit) 13A, a first mixer (first mixing unit) 14, a second heat exchanger (second heat exchange unit) 15, and a regeneration tower 16.

In the CO₂ recovery apparatus 10, an absorbing liquid 22 absorbing CO₂ in a discharge gas 21 containing CO₂ is circulated through a portion between the absorption tower 11 and the regeneration tower 16 (hereinafter referred to as "interior of system"). An absorbing liquid (rich solution) 23 absorbing CO₂ in the discharge gas 21 is fed from the absorption tower 11 to the regeneration tower 16. The absorbing liquid (lean solution) 22 regenerated by removing virtually all of CO₂ from the rich solution 23 in the regeneration tower 16 is fed from the regeneration tower 16 to the absorption tower 11. In the present embodiment, when an absorbing liquid is simply described, the absorbing liquid refers to the lean solution 22 or/and the rich solution 23.

The discharge gas 21 is a discharge gas containing CO₂, such as a combustion discharge gas discharged from a boiler, a gas turbine, or the like in a thermal power plant or the like or a process discharge gas generated from ironworks. The discharge gas 21 is pressurized by a discharge gas blower or the like, cooled in a cooling tower, and then supplied from a side wall of the tower bottom (lower portion) of the absorption tower 11 into the tower through a flue.

In the absorption tower 11, gas-liquid contact of the discharge gas 21 containing CO₂ with the lean solution 22 is carried out to allow the lean solution 22 to absorb CO₂. The absorption tower 11 includes, for example, a counterflow gas-liquid contactor. The absorption tower 11 includes: an absorption unit 24 including a packing for enhancing the efficiency of gas-liquid contact; and a spray nozzle 25, in the tower. The discharge gas 21 fed into the tower flows from a lower portion in the tower toward a tower top (upper portion). The lean solution 22 is fed from the upper portion of the tower into the tower and sprayed into the tower by the spray nozzle 25. In the absorption tower 11, the discharge gas 21 moving upward in the tower comes into counterflow contact with the lean solution 22, and CO₂ in the discharge gas 21 is absorbed in the absorbing liquid 22 and removed, in the absorption unit 24.

A method of bringing the discharge gas 21 into contact with the lean solution 22 in the absorption tower 11 is not limited to a method of allowing the lean solution 22 to fall in mist form in the discharge gas 21 to achieve countercurrent contact between the discharge gas 21 and the lean solution 22 in the absorption unit 24, but may be, for example, a method of allowing the lean solution 22 to bubble with the discharge gas 21 to allow the lean solution 22 to absorb CO₂; and the like.

The lean solution 22 absorbs CO₂ in the discharge gas 21 in the absorption unit 24 and becomes the rich solution 23, which is stored in a lower portion. In contrast, a CO₂-removed discharge gas 26 from which CO₂ is removed in the absorption tower 11 is discharged from the upper portion of the absorption tower 11 to the outside.

The lean solution 22 is an aqueous amine-based solution containing an amine-based compound (amino group-containing compound) and water. It is preferable to use, in the lean solution 22, an aqueous amine solution having an amino group-containing compound that is reversibly changed to hydrophilicity or hydrophobicity depending on temperature. As the amino group-containing compound, one or more selected from the group consisting of amines can be used.

The amino group-containing compound preferably contains at least one amino group-containing compound (hereinafter referred to as a temperature-sensitive nitrogen compound (A)) represented by the following general formula (1): 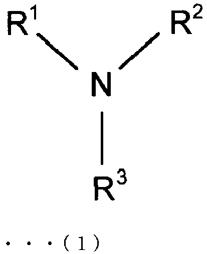 (in the above formula (1), R¹ is hydroxyalkyl, R² is unsubstituted C₃-C₁₀ cyclic alkyl, and R³ is hydrogen or unsubstituted alkyl).

In the above formula (1), R¹ is a hydroxyalkyl group, which imparts a temperature-sensitive nitrogen-containing compound mainly with hydrophilicity. The alkyl group that forms R¹ is straight or branched. The number of hydroxy groups in R¹ is not particularly limited if being one or more. The bonding site of each of the hydroxy groups to the alkyl group is not particularly limited. The number and bonding sites of the hydroxy groups in R¹ may be appropriately selected depending on lower critical solution temperature demanded for the temperature-sensitive nitrogen-containing compound (A) (water solubility is exhibited at less than LCST (lower critical solution temperature) and water insolubility is exhibited at LCST or more), water solubility, and the performance of absorption of an acid gas such as CO₂. The number of carbon atoms in R¹ is preferably 2 to 4. In view of acid gas absorption performance and water solubility, hydroxyethyl, 2-hydroxypropyl, 3-hydroxypropyl, or 2,3-dihydroxypropyl is more preferred, and hydroxyethyl is still more preferred.

The temperature-sensitive nitrogen-containing compound (A) exhibits hydrophilicity at low temperature and hydrophobicity at high temperature since the action of a hydrophilic group is higher at low temperature and the action of a hydrophobic group is higher at high temperature.

In the above formula (1), R² is unsubstituted, C₃-C₁₀, more preferably C₃-C₈ cyclic alkyl. The temperature-sensitive nitrogen-containing compound (A) produces various reaction products with acid gases to thereby absorb the acid gases. When the temperature-sensitive nitrogen-containing compound (A) has steric hindrance, the steric hindrance greatly influences the kinds of the reaction products. For example, when the temperature-sensitive nitrogen-containing compound (A) absorbs CO₂, bicarbonate ions are advantageously produced due to the steric hindrance of the compound. Since heat of reaction is comparatively low in the reaction of producing bicarbonate ions from the temperature-sensitive nitrogen-containing compound (A) and CO₂, the heat of reaction in the absorption of CO₂ can be reduced to improve CO₂ absorption power due to the adequate steric hindrance of the temperature-sensitive nitrogen-containing compound (A).

In the above formula (1), R² has the function of applying adequate steric hindrance to the temperature-sensitive nitrogen-containing compound (A) to improve acid gas absorption performance. R² that is cyclic alkyl results in a structure, in which steric hindrance is great, and in excellent acid gas absorption performance, for example, compared to a case in which R² is chain alkyl.

Of the cyclic alkyl groups described above, cyclopropyl, cyclobutyl, cyclopentyl, and cyclohexyl groups are preferred as R² from the viewpoint of acid gas absorption performance and water solubility. Cyclopentyl and cyclohexyl groups are particularly preferred, and in this case, high steric hindrance can be applied to the temperature-sensitive nitrogen-containing compound (A) while maintaining the favorable solubility of the temperature-sensitive nitrogen-containing compound (A) in water. Thus, the effect of reducing the heat of reaction in absorption of an acid gas can be enhanced to provide excellent acid gas absorption performance.

In the above formula (1), R³ is hydrogen or unsubstituted alkyl. R³ can be appropriately selected in consideration of, e.g., interaction with physical properties expressed by the R¹ and R² described above depending on acid gas absorption performance and phase separation performance demanded for the temperature-sensitive nitrogen-containing compound (A). Specifically, R³ is preferably hydrogen or C₁-C₃ alkyl, more preferably hydrogen or methyl, when the number of carbon atoms in R² is 3 to 10. In a case in which R² is cyclopentyl, cyclohexyl, cycloheptyl, or cyclooctyl, the temperature-sensitive nitrogen-containing compound (A) exhibits a favorable phase separation property while exerting favorable acid gas absorption performance when R³ is methyl.

In view of phase separation properties and acid gas absorption performance, 2-(cyclopentylamino)ethanol, 1-(cyclopentylamino)-2-propanol, 3-(cyclopentylamino)-1,2-propanediol, 4-(cyclopentylamino)-1-butanol, 2-(cyclohexylamino)ethanol, 1-(cyclohexylamino)-2-propanol, 3-(cyclohexylamino)-1,2-propanediol, 2-(cycloheptylamino)ethanol, 1-(cycloheptylamino)-2-propanol, 1-(cycloheptylamino)-1,2-propanediol, 2-(cyclooctylamino)ethanol, 3-(cyclooctylamino)-1,2-propanediol, 3-(cyclohexylamino)-1-propanol, 2-(N-cyclopentyl-N-methylamino)ethanol, 1-(N-cyclopentyl-N-methylamino)-2-propanol, 3-(N-cyclopentyl-N-methylamino)-1,2-propanediol, 4-(N-cyclopentyl-N-methylamino)-1-butanol, 2-(N-cyclohexyl-N-methylamino)ethanol, 1-(N-cyclohexyl-N-methylamino)-2-propanol, 3-(N-cyclohexyl-N-methylamino)-1,2-propanediol, 2-(N-cycloheptyl-N-methylamino)ethanol, 1-(N-cycloheptyl-N-methylamino)-2-propanol, 3-(N-cycloheptyl-N-methylamino)-1,2-propanediol, 2-(N-cyclooctyl-N-methylamino)ethanol, 3-(N-cyclooctyl-N-methylamino)-1,2-propanediol, 3-(N-cyclohexyl-N-methylamino)-1-propanol, 2-(N-cyclopentyl-N-ethylamino)ethanol, 1-(N-cyclopentyl-N-ethylamino)-2-propanol, 3-(N-cyclopentyl-N-ethylamino)-1,2-propanediol, 4-(N-cyclopentyl-N-ethylamino)-1-butanol, 2-(N-cyclohexyl-N-methylamino)ethanol, 1-(N-cyclohexyl-N-ethylamino)-2-propanol, 3-(N-cyclohexyl-N-ethylamino)-1,2-propanediol, 2-(N-cycloheptyl-N-ethylamino)ethanol, 1-(N-cycloheptyl-N-ethylamino)-2-propanol, 3-(N-cycloheptyl-N-ethylamino)-1,2-propanediol, 2-(N-cyclooctyl-N-ethylamino)ethanol, 3-(N-cyclooctyl-N-ethylamino)-1,2-propanediol, 3-(N-cyclohexyl-N-ethylamino)-1-propanol, and the like are preferably used as the temperature-sensitive nitrogen-containing compound (A).

The LCST of the temperature-sensitive nitrogen compound (A) is preferably 50°C or more and 100°C or less, more preferably 50°C or more and 80°C or less. As explained below, the temperature-sensitive nitrogen compound (A) partially releases an acid gas, such as CO₂, absorbed in a temperature rising process, even at less than the LCST. In other words, when the LCST is more than 100°C, heating temperature in the case of phase separation becomes high, and energy used for releasing CO₂ is increased. In contrast, when the LCST is less than 50°C, the absorbing liquid may undergo phase separation in the case of absorbing an acid gas, and acid gas absorption efficiency may be deteriorated.

The content of the temperature-sensitive nitrogen compound (A) in the absorbing liquid is preferably 15 to 50 mass%, more preferably 20 to 50 mass%, with respect to the total amount of the absorbing liquid. When an amino group-containing compound is used in the absorbing liquid, the higher concentration of the amino group-containing compound generally results in the more amounts of absorbed and desorbed acid gases per unit volume and in higher acid gas absorption and release rates. Therefore, the higher concentration is preferred in view of reduction in energy consumption and the size of a plant facility and of improvement of treatment efficiency. However, when the concentration of the amino group-containing compound in the absorbing liquid is excessively high, water contained in the absorbing liquid is unable to sufficiently exert a function as an activator for absorption of an acid gas. In addition, the excessively high concentration of the amino group-containing compound in the absorbing liquid results in an unignorable drawback such as rise in the viscosity of the absorbing liquid. When the content of the temperature-sensitive nitrogen compound (A) in the absorbing liquid is 50 mass% or less, any phenomenon such as the rise in the viscosity of the absorbing liquid or the deteriorated functional of water as the absorbing liquid does not occur. By allowing the content of the temperature-sensitive nitrogen compound (A) to be 15 mass% or more, the sufficient amount and rate of absorption by the absorbing liquid can be obtained and excellent treatment efficiency can be obtained.

A content of the temperature-sensitive nitrogen compound (A) of 15 to 50 mass% results not only in the large amount of absorbed CO₂ and the high rate of absorbing CO₂ but also in the large amount of desorbed CO₂ and the high rate of desorbing CO₂ in the case of using the absorbing liquid for recovering CO₂. Therefore, the content is advantageous in view of enabling efficient recovery of CO₂.

It is preferable to use the amino group-containing compound mixed with a reaction accelerator. As the reaction accelerator, there can be used an alkanolamine and/or a heterocyclic amine compound (hereinafter referred to as a heterocyclic amine compound (2)) represented by the following general formula (2):

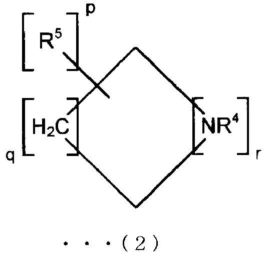

In the above formula (2), R⁴ represents hydrogen or C₁-C₄ alkyl, R⁵ represents C₁-C₄ alkyl bound to a carbon atom, r represents an integer from 1 to 3, q represents an integer from 1 to 4, and p represents an integer from 0 to 12. When r is 2 to 3, nitrogen atoms are not directly bound to each other. When q is 2, r is an integer of 1 or 2. Each of Some of the hydrogen atoms of C₁-C₄ alkyl in R⁴ and some of the hydrogen atoms of C₁-C₄ alkyl in R⁵ may be substituted by a hydroxyl group or an amino group.

The amount of absorbed acid gas such as CO₂ per unit mole of the amino group-containing compound, the amount of absorbed acid gas per unit volume of the absorbing liquid, and the rate of absorption of an acid gas can be still more improved by using the amino group-containing compound mixed with an alkanolamine and/or the heterocyclic amine compound (2). By using the amino group-containing compound mixed with an alkanolamine and/or the heterocyclic amine compound (2), energy for separating an acid gas after absorption of the acid gas (acid gas release energy) is also decreased to enable energy for regenerating the rich solution 23 to be reduced.

Examples of alkanolamines as reaction accelerators include monoethanolamine, 2-amino-2-methyl-1-propanol, 2-amino-2-methyl-1,3-dipropanolamine, methylaminoethanol, ethylaminoethanol, propylaminoethanol, diethanolamine, bis(2-hydroxy-1-methylethyl)amine, methyldiethanolamine, dimethylethanolamine, diethylethanolamine, triethanolamine, dimethylamino-1-methylethanol, 2-methylaminoethanol, 2-ethylaminoethanol, 2-propylaminoethanol, n-butylaminoethanol, 2-(isopropylamino)ethanol, 3-ethylaminopropanol, triethanolamine, diethanolamine, and the like. As used herein, "alkanolamine" refers to a compound having an amino group and a hydroxyl group in one molecule.

Of these, at least one selected from the group consisting of 2-(isopropylamino)ethanol, 2-(ethylamino)ethanol, and 2-amino-2-methyl-1-propanol is preferred as the alkanolamine from the viewpoint of further improving the reactivity of a tertiary amine with an acid gas such as CO₂.

Examples of heterocyclic amine compounds include azetidine, 1-methylazetidine, 1-ethylazetidine, 2-methylazetidine, 2-azetidinemethanol, 2-(2-aminoethyl)azetidine, pyrrolidine, 1-methylpyrrolidine, 2-methylpyrrolidine, 2-butylpyrrolidine, 2-pyrrolidylmethanol, 2-(2-aminoethyl)pyrrolidine, piperidine, 1-methylpiperidine, 2-ethylpiperidine, 3-propylpiperidine, 4-ethylpiperidine, 2-piperidylmethanol, 3-piperidylethanol, 2-(2-aminoethyl)pyrrolidine, hexahydro-1H-azepine, hexamethylenetetramine, piperazine, piperazine derivatives, and the like.

Of these, the piperazine derivatives are particularly desirable from the viewpoint of improvement of the amount and rate of absorption of an acid gas in the absorbing liquid. Such a piperazine derivative is a secondary amine compound, in which in general, a nitrogen atom in a secondary amino group is bound to carbon dioxide to form a carbamate ion to contribute to improvement of an absorption rate in an early reaction stage. Further, a nitrogen atom in the secondary amino group has the role of converting CO₂ bound to the nitrogen atom into a bicarbonate ion (HCO₃⁻) and contributes to improvement of a rate in the stage of the latter half of a reaction.

As such a piperazine derivative, at least one of 2-methyl piperazine, 2,5-dimethylpiperazine, 2,6-dimethylpiperazine, 1-methylpiperazine, 1-(2-hydroxyethyl)piperazine, and 1-(2-aminoethyl)piperazine is more preferred.

The content of the reaction accelerator (alkanolamine and/or heterocyclic amine compound (2)) contained in the absorbing liquid is preferably 1 to 15 mass%. A content of the reaction accelerator of less than 1 mass% may result in the insufficient effect of improving the rate of absorption of an acid gas. When the content of the reaction accelerator contained in the absorbing liquid is more than 15 mass%, the viscosity of the absorbing liquid may be excessively increased, and if anything, reactivity may be deteriorated.

The pH of the absorbing liquid is preferably adjusted to 9 or more. The pH of absorbing liquid 22 can be adjusted by adding a pH adjuster to the absorbing liquid. The pH of the absorbing liquid 22 is appropriately adjusted to an optimum condition depending on the kinds, concentrations, flow rates, and the like of gas components contained in the discharge gas 21.

The absorbing liquid may appropriately contain, in addition to the amino group-containing compound, reaction accelerator, and solvent such as water described above, arbitrary proportions of other compounds such as a nitrogen-containing compound for improving the performance of absorption of an acid gas such as CO₂, an anticorrosive agent based on phosphate or the like for preventing the corrosion of plant facilities, an antifoaming agent based on silicone or the like for preventing foaming, an oxidation inhibitor for preventing the deterioration of the absorbing liquid, and a pH adjuster as long as the effects of the absorbing liquid are not deteriorated.

The temperature of the absorbing liquid in the case of allowing the absorbing liquid to absorb the discharge gas 21 is typically from room temperature to 60°C or less. The temperature is preferably 50°C or less, more preferably around 20 to 45°C. The amount of absorbed CO₂ is increased with lowering the temperature. The lower limit of the treatment temperature depends on the temperature of a gas in a process, a heat recovery target, and the like. Typically, pressure in the absorption of CO₂ is approximately atmospheric pressure. Although pressurization to higher pressure can also be performed in order to enhance absorption performance, it is preferable to perform the pressurization under atmospheric pressure in order to reduce the consumption of energy needed for compression.

An example of the amount of CO₂ absorbed in the absorbing liquid supplied to the absorption tower 11 will be described. In the absorption tower 11, the amount of CO₂ absorbed in the absorbing liquid containing 15 to 50 mass% of the temperature-sensitive nitrogen compound (A) described above in the absorption of CO₂ (40°C) is around 0.20 to 0.85 mole per mole of amine contained in the absorbing liquid. In the absorption tower 11, the rate of absorption of CO₂ is around 0.006 to 0.009 mol/min after a lapse of several minutes from the point of the time of starting the absorption of CO₂ in the absorbing liquid containing 10 to 50 mass% of the temperature-sensitive nitrogen compound (A) described above.

A CO₂ saturation absorption amount is a value obtained by measuring the amount of inorganic carbon in an absorbing liquid by an infrared gas concentration measuring apparatus. A CO₂ absorption rate is a value measured using an infrared carbon dioxide meter at the time of a lapse of several minutes from the point of the time of starting the absorption of CO₂.

As illustrated in FIG. 1, the rich solution 23 stored in the lower portion of the absorption tower 11 is pulled out through a rich solution supply line L11, force-fed from the lower portion of the absorption tower 11 by a pump 27 disposed in the outside, and subjected to heat exchange in the first heat exchanger 12.

The first heat exchanger 12 heats the rich solution 23. The rich solution 23 is heated by heat exchange with the lean solution 22 in the first heat exchanger 12. The rich solution 23 is heated to from 50 to 100°C, preferably heated to 55 to 100°C, more preferably heated to 60 to 100°C, in the first heat exchanger 12. Under a condition in which pressure at which CO₂ in the rich solution 23 is desorbed is approximately atmospheric pressure, CO₂ in the rich solution 23 is desorbed when the temperature of the rich solution 23 is 70°C or more. For example, the amount of CO₂ desorbed in an aqueous solution containing 15 to 50 mass% of the temperature-sensitive nitrogen compound (A) at 70°C is around 0.25 to 0.70 mole per mole of amine contained in the rich solution 23. Thus, the rich solution 23 is heated in the temperature range described above, whereby CO₂ is desorbed from part of the rich solution 23, the rich solution 23 has a mixed phase containing two phases of a CO₂-rich phase 31 and a CO₂-lean phase 32, and the fine droplets of the CO₂-rich phase 31 are dispersed in the CO₂-lean phase 32.

The rich solution 23 becomes in a state in which the mixed phase containing the two phases of the CO₂-rich phase 31 and the CO₂-lean phase 32 is formed in the first heat exchanger 12 and is supplied to the phase separator 13A.

As the kind of the first heat exchanger 12, which is not particularly limited, for example, a known heat exchanger such as a plate heat exchanger or a shell & tube heat exchanger can be used.

In the phase separator 13A, the rich solution 23 is subjected to phase separation into the CO₂-rich phase 31 and the CO₂-lean phase 32. The phase separator 13A includes a cartridge-type filter 33 therein. The filter 33 includes: a fiber layer 34 including hydrophilic fibers; and a cartridge body 35 for accommodating the fiber layer 34. Although a case in which the filter 33 is a cartridge type is described in the present embodiment, another type is also acceptable without limitation to the case. The phase separator 13A may include a plurality of filters 33 without limitation to a case in which the phase separator 13A includes one filter 33.

The hydrophilic fibers are fibers obtained by hydrophilization treatment of the surfaces of fibers comprising a polymer material such as a polyolefin, a polyester, a polyamide, or a polyacryl. The hydrophilization treatment is, for example, treatment of applying a polymer material containing a polyvinyl alcohol, a polyamide, a polypeptide, a polycarboxylic acid, or the like as a main component and having a functional group such as a hydroxyl group, an amino group, an amide group, or a carboxyl group.

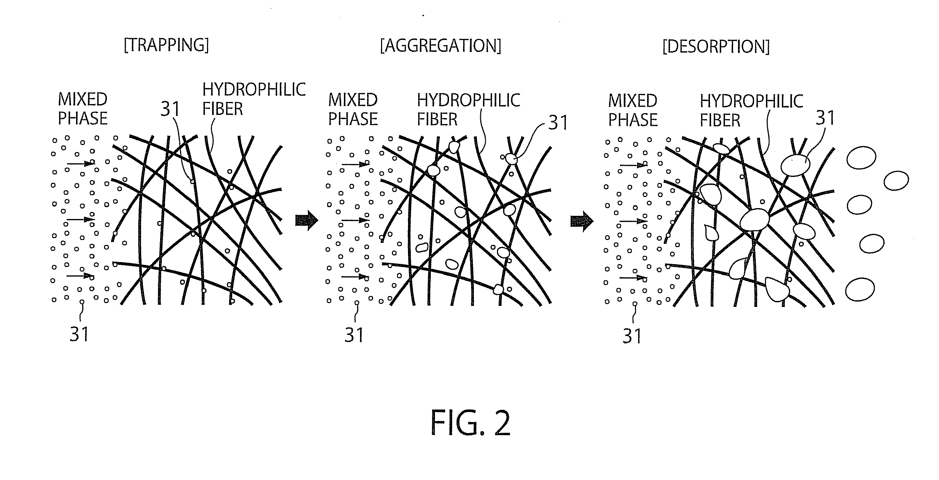

The rich solution 23 is supplied from a liquid inlet 36 formed in the bottom of the phase separator 13A to the inside of the filter 33 through a communication path 37. Since the CO₂-rich phase 31 is hydrophilic and the CO₂-lean phase 32 is hydrophobic, the CO₂-lean phase 32 is passed through the fiber layer 34 and the CO₂-rich phase 31 is trapped by the fiber layer 34, aggregates, and is allowed to be bulky, as illustrated in FIG. 2, when the rich solution 23 is passed through the fiber layer 34 of the filter 33. The bulky CO₂-rich phase 31 is desorbed from the filter 33 and moves to a phase separation region A formed between the internal side of the phase separator 13A and the external side of the filter 33.

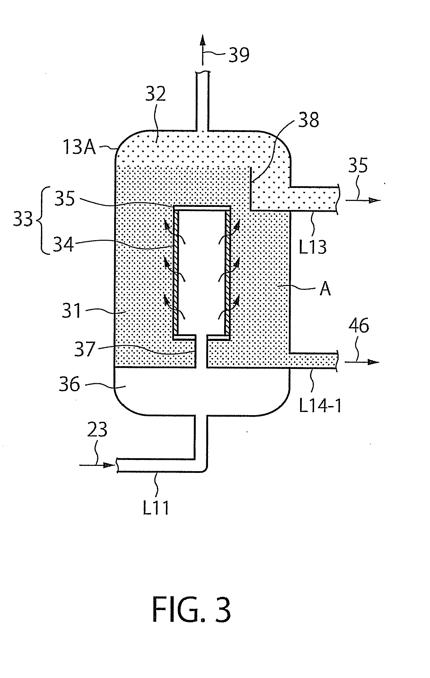

Since CO₂ contained in the CO₂-rich phase 31 is more than CO₂ contained in the CO₂-lean phase 32, the specific gravity of the CO₂-rich phase 31 is higher than that of the CO₂-lean phase 32. Therefore, as illustrated in FIG. 3, the CO₂-rich phase 31 is stored in the lower portion of the phase separator 13A, and the CO₂-lean phase 32 is formed in a portion above the CO₂-rich phase 31, in the mixed phase of the CO₂-rich phase 31 and the CO₂-lean phase 32 that have been passed through the fiber layer, in the phase separation region A. As a result, the state of phase separation into the CO₂-rich phase 31 and the CO₂-lean phase 32 is formed in the phase separation region A. As the CO₂-rich phase 31 is stored in the phase separator 13A, the CO₂-lean phase 32 is pushed up to the upper portion of the phase separation region A.

The CO₂-rich phase 31 is discharged from the lower portion of the phase separator 13A while the CO₂-lean phase 32 is discharged from the upper portion of the phase separator 13A. The CO₂-lean phase 32 discharged from the phase separator 13A is supplied as a separated CO₂-lean solution 35 to a first mixer 14 through a lean solution mixing line L13.

In the first mixer 14, the separated CO₂-lean solution 35 supplied through the lean solution mixing line L13 is mixed with the lean solution 22. The lean solution 22 is mixed with the separated CO₂-lean solution 35 in the first mixer 14 and then supplied to the absorption tower 11. The first mixer 14 may be between the absorption tower 11 and the regeneration tower 16 and in a portion in which the lean solution 22 flows from the regeneration tower 16 to the absorption tower 11. Since the separated CO₂-lean solution 35 is a liquid separated and produced from the rich solution 22, the temperature of the separated CO₂-lean solution 35 is lower than that of the lean solution 22 regenerated in the regeneration tower 16. It is preferable to dispose the first mixer 14 between the first heat exchange unit 12 and the second heat exchange unit 15 in order to efficiently heat the rich solution 23 and the CO₂-rich phase 31 discharged from the first mixer 14 by using the lean solution 22.

The phase separator 13A includes a liquid storage 38 for storing the CO₂-lean phase 32 pushed up to the upper portion of the phase separation region A over the inner periphery of the phase separator 13A below a discharge port for the CO₂-lean phase 32. As a result, the CO₂-lean phase 32 pushed up to the upper portion of the phase separation region A can be stored, and therefore a discharge amount can be adjusted while storing the CO₂-lean phase 32.

A CO₂ gas 43 contained in the CO₂-rich phase 31 and the CO₂-lean phase 32 in the phase separation region A is desorbed from the CO₂-rich phase 31 and the CO₂-lean phase 32 and discharged from the upper portion of the phase separator 13A. A CO₂ gas 36 is cooled in a cooler 41 to condense moisture contained in the CO₂ gas 36 and is then separated into the CO₂ gas 43 and a condensate liquid 44 by a steam separator 42. The separated CO₂ gas 36 is discharged to the outside, and the condensate liquid 44 is supplied to a second heat exchanger 45 through a condensate liquid supply line L12. As a result, the condensate liquid 44 can be effectively used as a solvent for the lean solution 22.

The CO₂-rich phase 31 is discharged as a separated CO₂-rich solution 46 from the lower portion of the phase separator 13A, passed through a separated CO₂-rich solution supply line L14 from the phase separator 13A, and subjected to heat exchange with the lean solution 22 regenerated in the regeneration tower 16 by the second heat exchanger 15.

The second heat exchanger 15 heats the separated CO₂-rich solution 46. The rich solution 23 is heated by heat exchange with the lean solution 22 in the second heat exchanger 15. As the second heat exchanger 15, a known heat exchanger such as a plate heat exchanger or a shell & tube heat exchanger can be used as in the case of the first heat exchanger 12. The separated CO₂-rich solution 46 is heated by the second heat exchanger 15 and then supplied to the upper portion of the regeneration tower 16 through the separated CO₂-rich solution supply line L14.

The regeneration tower 16 is a tower in which CO₂ is released from the separated CO₂-rich solution 46 to regenerate the absorbing liquid as the lean solution 22. The regeneration tower 16 includes a spray nozzle 51 and a packed bed 52 for enhancing the efficiency of gas-liquid contact in the tower. The separated CO₂-rich solution 46 supplied from the upper portion of the regeneration tower 16 into the tower is supplied into the interior of the tower through the spray nozzle 51, falls from the upper portion of the regeneration tower 16, and is heated by water vapor (steam) supplied from the lower portion of the regeneration tower 16 while passing through the packed bed 52. The water vapor is generated by heat exchange of the lean solution 22 with saturated steam 54 in a regeneration superheater (reboiler) 53. The separated CO₂-rich solution 46 is heated by the water vapor, whereby most of CO₂ contained in the separated CO₂-rich solution 46 is desorbed, the lean solution 22 from which almost all CO₂ is removed is generated at about the time when the separated CO₂-rich solution 46 reaches the lower portion of the regeneration tower 16. As a result, the lean solution 22 is stored in the lower portion of the regeneration tower 16. Part of the lean solution 22 stored in the lower portion of the regeneration tower 16 is discharged from the lower portion of the regeneration tower 16 through a lean solution circulation line L21, heated by the reboiler 53, and then resupplied into the regeneration tower 16. In this case, the lean solution 22 is heated by the reboiler 53, to generate water vapor, and remaining CO₂ is released as a CO₂ gas. The generated water vapor and CO₂ gas are returned into the regeneration tower 16, pass through the packed bed 52 of the regeneration tower 16, move upward, and heat the separated CO₂-rich solution 46 flowing down. As a result, CO₂ in the lean solution 23 is released as a CO₂ gas from the interior of the regeneration tower 16.

In the present embodiment, the separated CO₂-rich solution 46 is heated to have a temperature of at least 70°C or more by the first mixer 14 in the regeneration tower 16. In the regeneration tower 16, the separated CO₂-rich solution 46 is heated to preferably have a temperature of 80°C or more, more preferably 90 to 120°C, and CO₂ in the separated CO₂-rich solution 46 is desorbed and released. The amount of released CO₂ in the separated CO₂-rich solution 46 is increased with increasing the temperature while energy required for heating the separated CO₂-rich solution 46 is increased with increasing the temperature. Therefore, the temperature of the separated CO₂-rich solution 46 in the case of separating CO₂ depends on the temperature of a gas in a process, a heat recovery target, and the like. Typically, pressure in the release of CO₂ is approximately atmospheric pressure. Although the pressure can also be decreased to lower pressure in order to enhance release performance, atmospheric pressure is preferred for reducing the consumption of energy needed for reducing the pressure.

A method of releasing CO₂ from the separated CO₂-rich solution 46 to perform reproduction as the lean solution 22 in the regeneration tower 16 is not limited to a method of allowing the separated CO₂-rich solution 46 to fall in mist form to achieve countercurrent contact between the separated CO₂-rich solution 46 and water vapor in the packed bed 52 to heat the separated CO₂-rich solution 46 but may be, for example, a method of heating the separated CO₂-rich solution 46 to release CO₂, and the like.

A CO₂ gas released from the lean solution 22 is discharged, together with water vapor simultaneously evaporating from the lean solution 22, from the upper portion of the regeneration tower 16. A mixed gas 61 containing the CO₂ gas and the water vapor is supplied to a cooler 62 through a recovery CO₂ discharge line L22 and cooled with cooling water 63 in the cooler 62, and the water vapor is condensed and becomes water. In addition, a fluid mixture containing the condensed water and a CO₂ gas is supplied to a gas/liquid separator 64. The gas/liquid separator 64 separates a CO₂ gas 65 from water 66, and the CO₂ gas 65 is discharged from a recovery CO₂ discharge line L23 to the outside. The water 66 separated in the gas/liquid separator 64 is pulled out from the lower portion of the gas/liquid separator 64 and supplied as reflux water to the upper portion of the regeneration tower 14 through a reflux water supply line L24 by a circulating pump 68.

The lean solution 22 stored in the lower portion of the regeneration tower 16 is discharged as absorbing liquid from the lower portion of the regeneration tower 16, force-fed from the lower portion of the regeneration tower 16 by a pump 69 disposed in the outside, passed through a first lean solution supply line L31-1, subjected to heat exchange with the separated CO₂-rich solution 46 in the second heat exchanger 15, and then supplied to the first mixer 14. The lean solution 22 is mixed with the separated CO₂-lean solution 35 in the first mixer 14, then passed through a second lean solution supply line L31-2, subjected to heat exchange with the rich solution 23 in the first heat exchanger 12, then supplied to the second mixer (second mixing unit) 45, and mixed with a condensate liquid 39. Then, the lean solution 22 is passed through a third lean solution supply line L31-3 from the second mixer 45, subjected to heat exchange with cooling water 72 in a cooler 71, cooled, and then supplied to the absorption tower 11.

The CO₂ recovery apparatus 10 requires, for example, 20 to 30% of thermal energy based on the amount of power generation in a power generation facility including the CO₂ recovery apparatus 10, and the large amount of energy is required in the regeneration tower 16 for separating CO₂ from the rich solution 23 to obtain the lean solution 22 in the regeneration tower 16. Thus, thermal energy needed in the CO₂ recovery apparatus 10 is reduced, whereby the operational cost of a power generation facility including the CO₂ recovery apparatus 10 can be reduced to improve economical efficiency.

According to the present embodiment, as described above, the CO₂ recovery apparatus 10 includes the first heat exchanger 12 and the phase separator 13A, therefore, the rich solution 23 is allowed to be in the mixed phase of the CO₂-rich phase 31 and the CO₂-lean phase 32 in the first heat exchanger 12, the rich solution 23 is then subjected to phase separation into the CO₂-rich phase 31 and the CO₂-lean phase 32 in the phase separator 13A, and the separated CO₂-rich solution 46 including the CO₂-rich phase 31 can be supplied to the regeneration tower 16. Thus, in accordance with the present embodiment, the amount of the supplied absorbing liquid containing CO₂ can be allowed to be smaller than that of the rich solution 23 in the regeneration tower 16, and therefore, energy necessary for separating and recovering CO₂ from the rich solution 23 can be reduced in the CO₂ recovery apparatus 10.

According to the present embodiment, the concentration of CO₂ in the separated CO₂ rich solution 46 supplied to the regeneration tower 16 is higher than that in the rich solution 23, and therefore, the CO₂ recovery apparatus 10 can efficiently recover CO₂ from the rich solution 23 produced in the absorption tower 11 in the regeneration tower 16.

According to the present embodiment, in the CO₂ recovery apparatus 10, the phase separator 13A includes the filter 33 including the fiber layer 34, and therefore, the phase separation of the rich solution 23 can be easily performed in a short time in the phase separator 13A. Therefore, according to the present embodiment, the CO₂ recovery apparatus 10 can stably continuously supplies the separated CO₂-rich solution 46 to the regeneration tower 16.

According to the present embodiment, the CO₂ recovery apparatus 10 includes the first mixer 14 and enables the CO₂-lean phase 32 separated and obtained in the phase separator 13A to be mixed with the lean solution 22. Therefore, according to the present embodiment, in the CO₂ recovery apparatus 10, the lean phase 32 obtained from the rich solution 23 can be effectively used for absorbing CO₂ in the absorption tower 11.

According to the present embodiment, the CO₂ recovery apparatus 10 includes the second heat exchanger 15, and therefore, the separated CO₂ rich solution 46 can be heated and then supplied to the regeneration tower 16. Therefore, in the regeneration tower 16, the amount of energy necessary for heating the separated CO₂-rich solution 46 is reduced, and burden on the reboiler 53 can be reduced. Thus, according to the present embodiment, energy necessary for separating and recovering CO₂ from the rich solution 23 can be further reduced to further efficiently regenerate the lean solution 22 in the regeneration tower 16.

According to the present embodiment, in the CO₂ recovery apparatus 10, only the lean solution 22 is supplied to the absorption tower 11, a solution containing CO₂ is not supplied to the absorption tower 11, and therefore, the performance of absorption of CO₂ can be stably maintained, and CO₂ can be stably absorbed in the absorption tower 11.

### (Second Embodiment)

A CO₂ recovery apparatus according to a second embodiment will be described with reference to the drawings. The same sign will be applied to a member having the same function as that in the embodiment described above, and the detailed description thereof will be omitted. Since the present embodiment is the same except the construction of the phase separator of the CO₂ recovery apparatus according to the first embodiment illustrated in FIG. 1, only the construction of the phase separator will be described.

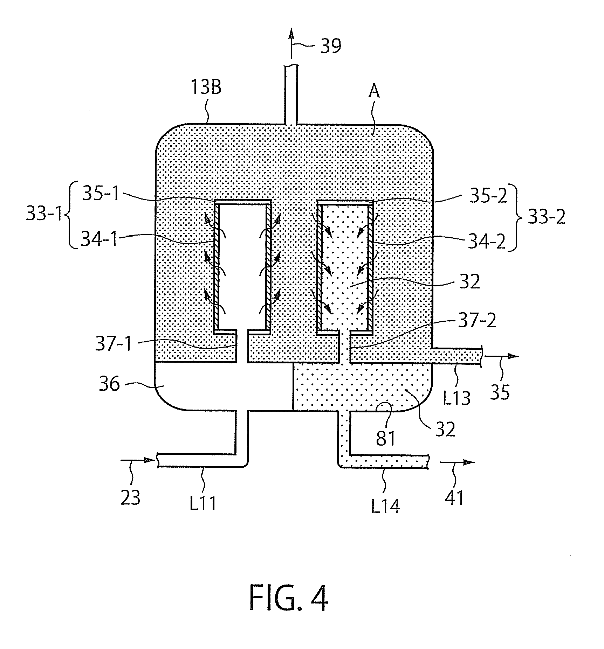

FIG. 4 is a schematic view illustrating the constructing of the phase separator of a CO₂ recovery apparatus according to the second embodiment. As illustrated in FIG. 4, a phase separator 13B includes a first filter 33-1 and a second filter 33-2. The first filter 33-1 and the second filter 33-2 have the same construction as that of the filter 33 of the CO₂ recovery apparatus 10 according to the first embodiment. The phase separator 13B is not limited to a phase separator including one first filter 33-1 and one second filter 33-2, but either or both of the first filter 33-1 and the second filter 33-2 included in the phase separator 13B may be plural.

A rich solution 23 is supplied from a liquid inlet 36 formed in the bottom of the phase separator 13B to the inside of the first filter 33-1 through a communication path 37-1. When the rich solution 23 passes through a first fiber layer 34-1 in the first filter 33-1, a CO₂-lean phase 32 passes through the first fiber layer 34-1. A CO₂-rich phase 31 is trapped by the first fiber layer 34-1, is allowed to be bulky, is then released from the first fiber layer 34-1, and moves to a phase separation region A. Then, a mixed phase containing the CO₂-rich phase 31 and the CO₂-lean phase 32 is separated into the CO₂-rich phase 31 and the CO₂-lean phase 32 by a difference in specific gravity, and the CO₂-lean phase 32 present in the phase separation region A passes through a second fiber layer 34-2, moves to the inside of the second filter 33-2, passes through a communication path 37-2, moves to a liquid outlet 81, and is discharged from the phase separator 13B to a separated CO₂-rich solution supply line L14. Meanwhile, the CO₂-rich phase 31 present in the phase separation region A is allowed to be bulky and becomes large when desorbed from the first fiber layer 34-1. Therefore, the CO₂-rich phase 31 present in the phase separation region A is unable to pass through the second fiber layer 34-2 and can be allowed to remain in the phase separation region A.

According to the present embodiment, the first filter 33-1 and the second filter 33-2 are included in the phase separation region A, and therefore, the CO₂-lean phase 32 can pass through the second fiber layer 34-2 even when a floating CO₂-rich phase that floats without settling, in the CO₂-rich phase 31, is present in the phase separation region A. Therefore, the phase separator 13B can separate the CO₂-rich phase 31 and the CO₂-lean phase 32 with further high precision. Thus, according to the present embodiment, supply of part of the CO₂-rich phase 31 together with the CO₂-lean phase 32 to an absorption tower 11 can be suppressed.

In the present embodiments, a case in which the discharge gas 21 contains CO₂ as an acid gas is described. However, the present embodiments can also be similarly applied to a case in which another acid gas such as H₂S, COS, CS₂, NH₃, or HCN, other than CO₂, is contained. In addition, the present embodiments can also be similarly applied to a case in which the discharge gas 21 contains an acid gas other than CO₂.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

- 10: CO₂ recovery apparatus
- 11: Absorption tower
- 12: First heat exchanger
- 13A, 13B: Phase separator (phase separation unit)
- 14: First mixer (first mixing unit)
- 15: Second heat exchanger (second heat exchange unit)
- 16: Regeneration tower
- 21: Discharge gas
- 22: Absorbing liquid (lean solution)
- 23: Absorbing liquid absorbing CO₂ (rich solution)
- 31: CO₂-rich phase
- 32: CO₂-lean phase
- 33: Filter
- 33-1: First filter
- 33-2: Second filter
- 34: Fiber layer
- 34-1: First fiber layer
- 34-2: Second fiber layer
- 35: Separated CO₂-lean solution
- 45: Second mixer (second mixing unit)
- 46: Separated CO₂-rich solution

## Claims

1. A carbon dioxide recovery apparatus comprising:
an absorption tower in which gas-liquid contact of a discharge gas containing CO₂ with an absorbing liquid is carried out to allow said absorbing liquid to absorb said CO₂;
a first heat exchange unit that heats said absorbing liquid containing CO₂ to from 50 to 100°C to allow said absorbing liquid containing CO₂ to have a mixed phase comprising a CO₂-rich phase and a CO₂-lean phase;
a phase separation unit that separates said absorbing liquid containing CO₂ into said CO₂-rich phase and said CO₂-lean phase, discharges said CO₂-rich phase as a separated CO₂-rich solution, and discharges said CO₂-lean phase as a separated CO₂-lean solution; and
a regeneration tower in which CO₂ contained in said separated CO₂-rich solution is separated to regenerate said absorbing liquid.

2. The apparatus according to claim 1, wherein said absorbing liquid comprises at least one amino group-containing compound that is reversibly changed to hydrophilicity or hydrophobicity depending on temperature and selected from the group consisting of amines.

3. The apparatus according to claim 1, wherein said phase separation unit comprises a filter comprising a fiber layer comprising a hydrophilic fiber, where said CO₂-lean phase is passed through said fiber layer, and a droplet contained in said CO₂-rich phase is trapped and allowed to be bulky by said fiber layer and then desorbed from said fiber layer; and
said mixed phase passed through said fiber layer is separated into said CO₂-rich phase and said CO₂-lean phase due to a difference in specific gravity.

4. The apparatus according to claim 3, wherein said phase separation unit comprises:
a first filter to which said absorbing liquid containing CO₂ is supplied; and
a second filter through which said CO₂-lean phase passed through said first filter is passed.

5. The apparatus according to claim 1, further comprising a second heat exchange unit that heats said separated CO₂-rich solution using as a heat source said absorbing liquid regenerated in said regeneration tower.

6. The apparatus according to claim 1, further comprising a first mixing unit in which said absorbing liquid regenerated in said regeneration tower is mixed with said separated CO₂-lean solution.

7. The apparatus according to claim 6, wherein said first mixing unit is disposed between said absorption tower and said regeneration tower.

8. The apparatus according to claim 1, further comprising:
a cooling unit in which a CO₂ gas released from said phase separation unit is cooled;
a gas/liquid separation unit in which a condensate liquid contained in said cooled CO₂ gas is separated; and
a condensate liquid supply line through which said condensate liquid is supplied from said gas/liquid separation unit to said absorption tower.

9. A carbon dioxide recovery method comprising:
carrying out gas-liquid contact of a discharge gas containing CO₂ with an absorbing liquid to allow said absorbing liquid to absorb said CO₂ in an absorption tower;
heating said absorbing liquid containing CO₂ discharged from said absorption tower to from 50 to 100°C in a first heat exchange unit, followed by allowing said absorbing liquid containing CO₂ to have a mixed phase comprising a CO₂-rich phase and a CO₂-lean phase;
separating said absorbing liquid containing CO₂ into said CO₂-rich phase and said CO₂-lean phase in a phase separation unit;
discharging said CO₂-rich phase as a separated CO₂-rich solution;
discharging said CO₂-lean phase as a separated CO₂-lean solution;
supplying said separated CO₂-rich solution to a regeneration tower;
releasing CO₂ from said separated CO₂-rich solution to regenerate said absorbing liquid; and
supplying said absorbing liquid regenerated in said regeneration tower to said absorption tower.

10. The method according to claim 9, wherein said absorbing liquid comprises at least one amino group-containing compound that is reversibly changed to hydrophilicity or hydrophobicity depending on temperature and selected from the group consisting of amines.

11. The method according to claim 9, wherein said phase separation unit comprises a filter comprising a fiber layer comprising a hydrophilic fiber, where said CO₂-lean phase is passed through said fiber layer, and a droplet contained in said CO₂-rich phase is trapped and allowed to be bulky by said fiber layer and then desorbed from said fiber layer;
said mixed phase is allowed to pass through said fiber layer, whereby said droplet contained in said CO₂-rich phase is trapped and allowed to be bulky; and
said mixed phase passed through said fiber layer is separated into said CO₂-rich phase and said CO₂-lean phase due to a difference in specific gravity.

12. The method according to claim 9, wherein said phase separation unit comprises a first filter and a second filter, comprising a fiber layer comprising a hydrophilic fiber;
said CO₂-lean phase is passed through said first fiber layer of said first filter, and a droplet contained in said CO₂-rich phase is trapped and allowed to be bulky by said first fiber layer and then desorbed from said first fiber layer;
said CO₂-lean phase passed through said first filter is further passed through said second fiber layer of said second filter;
said mixed phase is passed through said first fiber layer, whereby said droplet contained in said CO₂-rich phase is trapped and allowed to be bulky; and
said mixed phase passed through said first fiber layer is separated into said CO₂-rich phase and said CO₂-lean phase due to a difference in specific gravity, and said CO₂-lean phase is further passed through said second filter.

13. The method according to claim 9, wherein a CO₂-containing gas released from said phase separation unit is cooled, CO₂ contained in said CO₂-containing gas is then separated from a condensate liquid, and said separated condensate liquid is supplied to said absorption tower.

14. The method according to claim 9, wherein said separated CO₂-rich solution is heated using said absorbing liquid regenerated in said regeneration tower.

15. The method according to claim 9, wherein said separated CO₂-lean solution is mixed with said absorbing liquid regenerated in said regeneration tower and then supplied to said absorption tower.

16. The method according to claim 15, wherein said absorbing liquid regenerated in said regeneration tower is mixed with said separated CO₂-lean solution and then supplied to said first heat exchange unit, and said absorbing liquid containing CO₂ discharged from said absorption tower is heated.

17. The method according to claim 9, wherein a CO₂ gas released from said phase separation unit is cooled to separate a condensate liquid contained in said CO₂ gas, and said condensate liquid is supplied to said absorption tower.
